# EUROPEAN PATENT SPECIFICATION

(11) **EP 0 317 337 B1**
(45) Date of publication and mention of the grant of the patent: **10.02.1993**
(21) Application number: 88310909.2
(22) Date of filing: 18.11.1988
(51) Int. Cl.: C09J 7/02, B32B 27/00, E04D 5/10

(54) **Adhesive waterproofing structure**
Klebende, wasserdichte Struktur
Structure adhésive imperméabilisante

(30) Priority: 19.11.1987 GB 8727114
(43) Date of publication of application: 24.05.1989
(73) Proprietor: W.R. GRACE LIMITED, London NW10 7UH (GB)
(72) Inventor: Martin, Timothy John, Loxwood, West Sussex (GB)
(74) Representative: Senior, Alan Murray

(56) References cited:
- EP-A- 0 287 078
- DE-A- 2 830 536
- GB-A- 1 032 964
- GB-A- 2 122 110
- PATENT ABSTRACTS OF JAPAN, vol. 9, no. 211 (C-300)[1934], 29th August 1985; & JP-A-60 076 581 (NITTO DENKI KOGYO) 01-05-1985

## Description

This invention relates to an adhesive water proofing structure.

British patent 1230753 discloses a structure comprising a sheet like substrate, typically of polyethylene or another polymer, with, contiguous thereto, a membrane of a water proofing pressure sensitive adhesive, typically a mixture of bitumen and rubber. Structures of this general type have in recent years enjoyed great success. Some types of structure are used to provide a water proofing layer on subterranean concrete structures, at dams or reservoirs or in flooring. Other structures of this general type are used in roofing.

In some cases these roofing structures have as the substrate, or as an additional layer, a substrate similar to old fashioned roofing felt, that is an impregnated felt provided for instance with a layer of mineral chips. In other cases the plastic substrate forms the exposed surface of the roofing material. Where a plastic substrate is involved, there may be one of a variety of materials, e.g. PVC or low density polyethylene. However, when a robust substrate is required a laminate of toughened high density polyethylene film is often employed. Such a film may be highly stretched, for instance five or even ten times its original length, and then two films are adhered together to form a laminate with the directions of stretch preferably close to an angle of 90° to each other, so that the resultant material is a laminated biaxially orientated polyethylene or, put another way, a cross-laminated oriented polyethylene. In some cases the direction of stretch is close to 45° to the longitudinal direction of the resulting laminate.

Normally the polyethylene is translucent so that structures involving the polyethylene and the adhesive bitumen rubber mix will appear black. Sometimes it becomes white as a result of the stretching process, but reverts to being translucent in time. These colours may be aesthetically and functionally disadvantageous.

For certain applications, particularly applications in hot countries, it is desired to provide a coloured plastic substrate. When the above mentioned toughened polyethylene laminates are employed this presents problems. To introduce pigment into the polyethylene, other than intense or dark pigments, renders it vulnerable to tearing during the toughening, by stretching, operation.

Patents Abstracts of Japan Vol 9 211 (C-300) [1934], 1985 discloses an adhesive film or sheet for surface protection of e.g. metal plates comprising a polyolefinic layer and a further polyolefinic layer containing a pigment.

According to the present invention there is provided a structure for use in covering surfaces, the structure having a sheet like substrate, and contiguous thereto, a membrane of a water proofing adhesive, the sheet like substrate being cross-laminated oriented polyethylene characterised by a continuous film of a compatible and pigmented polymer extrusion coated onto the surface of the laminate remote from the adhesive membrane, the pigment imparting a light colour to the structure.

Although other polymers known to have inherent environmental resistence could be used, it is preferred that the pigmented polymer is also polyethylene, which can be low density polyethylene, as this is the most compatible with and most easily prepared with the polyethylene laminate, and has good long term environmental performance.

The pigmented polymer is applied as a continuous film by extrusion coating, as this ensures better bonding between the pigmented polymer and the underlying polyethylene laminate and better continuity of the coloured polymer film.

The pigmented polymer advantageously may include flake material, preferably metal flake.

Tests for ultraviolet resistance, temperature and moisture resistance and resistance to the compounds of the adhesive membrane suggest that best results are obtained if both of the features of the pigmented polymer being polyethylene and the pigmented polymer being a film, preferably extrusion coated are employed. Such products offer best dimensional stability, environmental resistance and resistance to delamination. For extrusion coating, the film is extruded from an orifice directly adjacent to a layer of the polyethylene laminate passing the orifice.

The pigmented polymer imparts a light colour to the structure, in order to keep it cooler and reduce the temperature elevation in sunlight. Lower temperatures experienced in the structure extend the extremes of ambient temperature under which the product can be applied on site and increases its life subsequently in such extremes. The use of metal or other flake in addition to or as the pigment is a feature which is particularly appropriate when the structure is to be used as a roofing material in hot climates.

Iron oxide and mica are examples of non-metallic flakes that can be used; metal flakes can also be used with advantage.

The present invention provides the possibility of imparting a light colour to a structure for use externally on buildings without in any way jeopardizing the strength of the laminated polyethylene film which, were it itself pigmented, either could not withstand the toughening procedure to which it is subjected or would not offer permanent colours. In addition, performance as a moisture, vapour or molecular barrier is improved by the use of flakes in the structure.

The laminate of polyethylene is typically a laminate of two sheets, as previously described, but could involve more sheets for instance an even number up to 8, or possibly as much as 16. The thickness of the laminate will typically be within the range of 75 to 150 microns, for two sheet combinations with a preferred thickness for a double laminate of 125 microns. Thickness will then tend to be in proportion to the number of sheets used. The pigmented polymer may have a thickness of up to for instance 40 microns, preferably in the range 15 to 20 or 25 microns.

The laminated polyethylene will, prior to lamination, have been highly stretched, for instance to 5 or 10 times its original length, for toughening purposes.

So far as the adhesive is concerned, this is normally a pressure-sensitive adhesive, typically a bitumen rubber mixture preferably at least 0.025 cm thick and for instance up to 0.5 cm thick if desired. The adhesive will generally be such that the membrane will stick to the required surface, without the use of heat or additional bonding agents, although priming of concrete surfaces to secure dust is normally advantageous. The thicker the layer of the adhesive the better the water proofing effect, but in general 0.063 to 0.4 cm thickness is satisfactory. For a bituminous adhesive it is preferable to use a natural or synthetic rubber, virgin or reclaimed, blended into bitumen to provide a smooth mix. The ratio by weight of bitumen to rubber is 80:20 up to 95:5 especially about 90:10. Generally, suitable compositions have softening temperatures measured by the Ring and Ball method of 60 to 140°C and penetration values of about 30 to 150 at 25°C (Institute of Petroleum Method).

It is believed that with the invention, satisfactory resistance is obtained to ultraviolet, atmospheric and ground water and to the oils in the adhesive. Lack of these preferred features is more likely to lead to fading or delamination, instead of maintenance of the original colour, while pigmenting or otherwise colouring the laminate itself will not give a satisfactory result, for technical or economic reasons.

For ease of manufacture, transport and laying there will normally be provided a disposable cover on the adhesive side of the adhesive membrane remote from the polyethylene substrate. This may take the form of a siliconised paper or film or easily removable thin plastic sheet.

The invention also provides a method of making a structure for use in covering surfaces by providing a membrane of a waterproofing adhesive on one surface of a cross-laminated oriented polyethylene and characterised by applying by extrusion coating a continuous film of a compatible and pigmented polymer, the pigment imparting a light colour to the structure.

The invention also provides a building with a surface covered by a structure as described above.

In order that the invention may be more clearly understood, the following description is given by way of example only, with reference to the accompanying drawings, in which:
Figure 1 of the accompanying drawings shows an example of a structure according to the invention in cross section.
Figure 2 is a highly schematic illustration of a pigmented layer being applied to the substrate by extrusion coating.

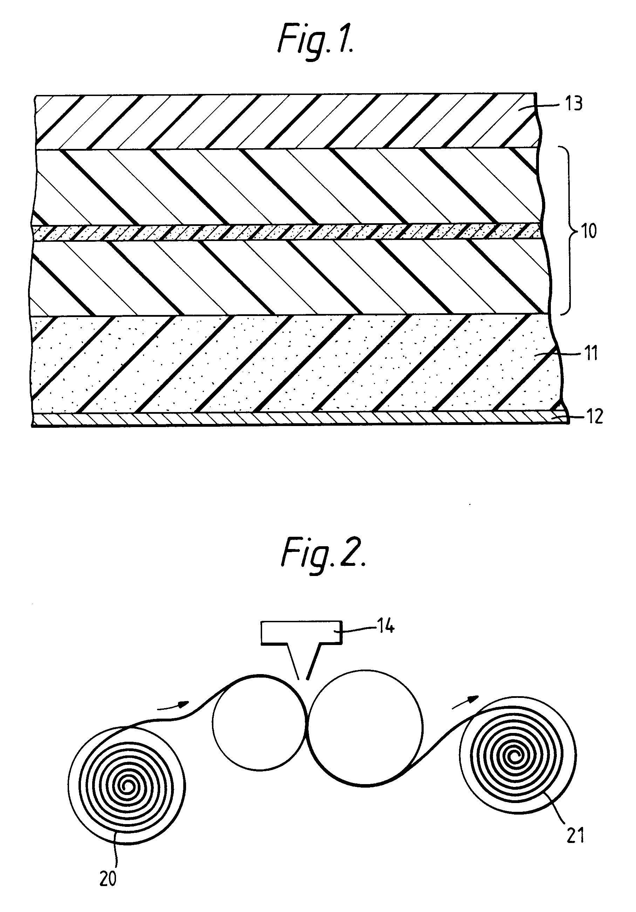

Shown at 10 in Figure 1, is the substrate of the structure of the invention, in this embodiment being a double layer of high density polyethylene, toughened by substantial stretching to several times its original length. Such a substrate is obtainable from Van Leer of Belgium under the name of "Valeron". The two layers are laminated to each other, usually with a low density polyethylene adhesive. Their directions of stretch are typically at right angles to one another and at 45° to the longitudinal direction of the resulting film.

Provided beneath the substrate at 11 is a adhesive waterproofing layer comprising a bitumen rubber mix contiguous to the substrate 10. At the side of the pressure sensitive adhesive remote from the substrate 10 is a release sheet 12, typically of siliconised paper, used to protect the surface of the adhesive after manufacture and before application, during which time the structure will usually be wound up in the form of a roll.

At the side of the substrate 10 remote from the pressure sensitive adhesive 11 is a formulated and pigmented plastic layer 13, typically formed as a continuous film permanently attached to the high density polyethylene substrate 10. Any desired colour, in particular a light colour, can be imparted to the overall structure by being included in this coloured layer 13 which as described above preferably is also of polyethylene although other plastics compatable with polyethylene may be used. Thus, possible coating materials include low and high density polyethylene, polypropylene, polyvinylidenechloride, polyamides or the ionomer resin "Surlyn" (Registered Trade Mark), or polyolefins.

Figure 2 shows schematically the provision of the pigmented layer 13 on the substrate 10 by the substrate 10 being passed from a supply roll 20 to a wind up roll 21 beneath a slit orifice of an extruder 14 which extrudes the pigmented layer directly onto the substrate 10. This operation can take place before or after formation of the adhesive pressure sensitive adhesive water proofing layer 11 on the other side of the substrate 10.

The invention is further explained and illustrated by the following examples.

### EXPERIMENT 1

Three types of self-adhesive structure comprising a self-adhesive bituminous layer, and a "Valeron" cross-laminated oriented polyethylene substrate covered by an extrusion coating of polyethylene with different pigmentations therein, imparting silver, gold and white respectively, were prepared. Also prepared, as a comparative example, was a conventional membrane without the coating, which was therefore grey-black. The grey-black structure had a 100 micron bi-layer of high density polyethylene. The gold and silver coloured ones each had a 130 micron thick substrate of the same material and respectively gold and silver pigmented low density polyethylene extrustion coatings. The white membrane was the same, except for the pigment and in having only a 100 micron thick substrate. All structures had a releasable protective layer covering the side of the membrane remote from the substrate. By way of test, these were placed beneath a 1000 W intense light source at such a distance that the comparative example structure with no overlayer of polyethylene reached a nominal temperature of 70°C, this being the temperature of the adhesive, measured in the adhesive layer. Each membrane having been so irradiated, attempts were made to remove the releasable layer. This was possible with membranes of the invention but in the case of the black membrane which, as mentioned above, reached a temperature of 70°C was not possible. The release paper would not separate from the adhesive.

### EXPERIMENT 2

It is important for structures of the type according to the invention to be able to tolerate extremes of heat and cold. For instance, in certain climates there will be daily exposure to the strong heating effects of the sun followed by nightly exposure to considerable cold. In these situations, stiff membranes can crack or adhesive can lose its strength and the polymers in the film and in the adhesive component can age.

To assess the present invention, the products previously described in connection with Example 1 were irradiated as before but after being laid on thermal insulation. This represents the most severe conditions since little heat can then pass through the membrane. In a further test the structures were irradiated instead with an infrared source of 150 watts. Included in these tests was another product, outside this invention, comprising membrane and substrate as in Example 1, but with the substrate having a yellow printed coating rather than an extrusion coated coating.

The maximum temperatures reached by each of the different coloured membranes was measured (again measured in the adhesive layer) as follows:

| | | | |
|---|---|---|---|
| 1. Grey-Black (prior art) | First Test 67.5°C | Second Test 70.5°C | Third Test (Infrared) 66°C |
| 2. Gold | First Test 58°C | Second Test 60°C | Third Test (Infrared) 57°C |
| 3. Silver | First Test 58°C | Second Test 59°C | Third Test (Infrared) 55°C |
| 4. White | First Test 48°C | Second Test 50°C | Third Test (Infrared) 49°C |
| 5. Yellow Printed | First Test 51°C | Second Test - | Third Test (Infrared) 54°C |
| The air temperatures were 25, 23, 23°C. | | | |

It will be seen that the invention is of considerable benefit in lowering the temperature of the membrane when it is exposed to powerful irradiation. Light coloured coatings reduce the temperature experienced by between 10 and 20°C, relative to the known grey-black dark membranes, and this is true when the application is by extrusion coating or printing.

Because polymer degradation increases rapidly with surface temperature, the prospective service life of structures according to the invention is clearly relatively improved with potential for, therefore, considerable product improvement especially where high temperature applications, for instance in the Middle East, countries are contemplated. Further, the adhesive will remain considerably more physically stable and this is of great importance when structures of the invention are applied to vertical or sloping surfaces, particularly for instance, on installation.

### EXPERIMENT 3

Tests were also conducted to assess permanence of coating in structures of the invention.

In order to do this, structures according to the invention were exposed to ASTM No 3 test oil continuously at 70°C. One structure of the invention was a film of 130 micron high density polyethylene with a low density 25-30 micron gold pigmented extrusion coated layer. Other films of the invention were made in printed form. In each case the base film was a 100 micron thick laminated 2 ply high density polyethylene "Valeron" film, with 1 micron, of blue or yellow, ink roller printed. The printed films became patchy or translucent after ten days, the extrusion coated film was substantially undamaged after 35 days. The same films were exposed to water at 70°C. For one of the printed films, the coating, although intact after 10 days, had shredded after 20 days. The other printed film became patchy after 10 days and had largely disappeared after 20 days. However, the extrusion coated film was fully intact and substantially undamaged after 35 days. Thus, while printed films are satisfactory in heat resistance, they do not display good permanence, while extrusion coated ones, which are according to the invention, display improved coating properties in both respects.

## Claims

1. A structure for use in covering surfaces, the structure having a sheet like substrate, and contiguous thereto, a membrane of a water proofing adhesive, the sheet like substrate being cross-laminated oriented polyethylene, characterised by a continuous film of a compatible and pigmented polymer extrusion coated onto the surface of the laminate remote from the adhesive membrane, the pigment imparting a light colour to the structure.

2. A structure according to claim 1 wherein the pigmented polymer is also polyethylene.

3. A structure according to claim 1 or 2, including flake material, preferably metal flake, in the pigmented polymer.

4. A method of making a structure for use in covering surfaces by providing a membrane of a waterproofing adhesive on one surface of a cross-laminated oriented polyethylene and characterised by applying by extrusion coating a continuous film of a compatible and pigmented polymer, the pigment imparting a light colour to the structure.

5. A building with a surface covered and protected by a product according to claim 1, 2 or 3.

## Patentansprüche

1. Struktur zur Verwendung bei der Abdeckung von Oberflächen, wobei die Struktur ein folienartiges Substrat und benachbart dazu eine Membran aus gegen Wasser abdichtendem Klebstoff aufweist und das folienartige Substrat kreuzweise laminiertes, orientiertes Polyethylen ist, gekennzeichnet durch eine kontinuierliche Folie aus einem verträglichen und pigmentierten Polymer, die auf die von der Klebstoffmembran entfernt liegende Oberfläche des Laminats extrusionsbeschichtet worden ist, wobei das Pigment der Struktur eine helle Farbe vermittelt.

2. Struktur nach Anspruch 1, bei der das pigmentierte Polymer ebenfalls Polyethylen ist.

3. Struktur nach Anspruch 1 oder 2, die in dem pigmentierten Polymer Schuppenmaterial, vorzugsweise Metallschuppen enthält.

4. Verfahren zur Herstellung einer Struktur zur Verwendung bei der Abdeckung von Oberflächen durch Versehen einer Oberfläche eines kreuzweise laminierten, orientierten Polyethylens mit einer Membran aus einem gegen Wasser abdichtenden Klebstoff, dadurch gekennzeichnet, daß eine kontinuierliche Folie eines verträglichen und pigmentierten Polymers mittels Extrusionsbeschichtung aufgebracht wird, wobei das Pigment der Struktur eine helle Farbe vermittelt.

5. Gebäude mit einer Oberfläche, die mit einem Produkt gemäß Anspruch 1, 2 oder 3 abgedeckt und geschützt ist.

## Revendications

1. Structure à utiliser pour couvrir des surfaces, la structure ayant un substrat en forme de feuille et, contiguë à celui-ci, une membrane d'un adhésif imperméabilisant, le substrat en forme de feuille étant un polyéthylène orienté à stratification entrecroisée, caractérisée par un film continu d'un polymère compatible et pigmenté enduit par extrusion à la surface du stratifié qui est éloignée de la membrane adhésive, le pigment impartissant une couleur claire à la structure,

2. Structure selon la revendication 1 où le polymère pigmenté est également du polyéthylène.

3. Structure selon la revendication 1 ou 2, comprenant un matériau en paillettes, de préférence des paillettes de métal dans le polymère pigmenté.

4. Méthode de production d'une structure à utiliser pour couvrir des surfaces en prévoyant une membrane d'un adhésif imperméabilisant sur une surface d'un polyéthylène orienté et à stratification entrecroisée et caractérisée par l'application, par revêtement par extrusion, d'un film continue d'un polymère compatible et pigmenté, le pigment impartissant une couleur claire à la structure.

5. Construction avec une surface couverte et protégée par un produit selon la revendication 1, 2 ou 3.
